(19) **Europäisches Patentamt European Patent Office Office européen des brevets**

(11) **EP 2 115 440 B1**

(12) **FASCICULE DE BREVET EUROPEEN**

(45) Date de publication et mention de la délivrance du brevet:
**03.08.2016 Bulletin 2016/31**

(51) Int Cl.:
*G01N 25/18* [(2006.01)]     *G01N 27/18* [(2006.01)]

(21) Numéro de dépôt: **08708838.1**

(22) Date de dépôt: **08.02.2008**

(86) Numéro de dépôt international:
**PCT/EP2008/051571**

(87) Numéro de publication internationale:
**WO 2008/101822 (28.08.2008 Gazette 2008/35)**

(54) **CAPTEUR DE GAZ THERMIQUE ET PROCEDE DE DETERMINATION DE LA CONCENTRATION D'UN GAZ**

THERMISCHER GASSENSOR UND VERFAHREN ZUR KONZENTRATIONSMESSUNG EINES GASES

THERMAL GAS SENSOR AND METHOD OF MEASURING GAS CONCENTRATION

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **15.02.2007   CH 257072007**

(43) Date de publication de la demande:
**11.11.2009   Bulletin 2009/46**

(73) Titulaire: **Neroxis SA
2000 Neuchâtel (CH)**

(72) Inventeurs:
• **DE COULON, Yves
CH-2072 Saint-blaise (CH)**
• **CHETELAT, Olivier
CH-2068 Hauterive (CH)**
• **BRODARD, Marc
CH-1180 Rolle (CH)**
• **ONILLON, Emmanuel
2208 Les Hauts-Geneveys (CH)**

(74) Mandataire: **GLN SA
Avenue Edouard-Dubois 20
2000 Neuchâtel (CH)**

(56) Documents cités:
**EP-A- 0 254 906     EP-A- 0 439 950
WO-A-99/34201     US-A- 5 515 714**

• **TARDY P ET AL: "Dynamic thermal conductivity sensor for gas detection" SENSORS AND ACTUATORS B, ELSEVIER SEQUOIA S.A., LAUSANNE, CH, vol. 98, no. 1, 1 mars 2004 (2004-03-01), pages 63-68, XP004493655 ISSN: 0925-4005**

Remarques:
Le dossier contient des informations techniques présentées postérieurement au dépôt de la demande et ne figurant pas dans le présent fascicule.

**Description**

Domaine technique

La présente invention concerne un capteur de gaz et, plus particulièrement, un capteur physique de gaz intégré de type thermique et capable de mesurer précisément la concentration d'un mélange de gaz même en présence d'humidité et sans que cette dernière perturbe la mesure.

Etat de la technique

Un capteur physique à conductivité thermique de gaz, commercialisé sous le code MGSM 2201 par la firme suisse Silsens SA, est basé sur la mesure de la conductivité thermique, entre un point chaud et un point froid, d'un gaz ou d'un mélange gazeux. En effet, la conductivité thermique d'un gaz ou d'un mélange de gaz varie notablement avec sa nature chimique. Un capteur de ce type permet de détecter des gaz, tels que $CO_2$, $H_2$ et $CH_4$, en présence dans l'air et offre l'avantage d'avoir une faible consommation alliée à une grande stabilité à long terme. Ce capteur de gaz à conductivité thermique est réalisé dans un substrat de silicium et fait appel aux techniques de déposition de films minces ainsi qu'aux techniques de micro-structuration. Le capteur comprend, de manière conventionnelle, un élément chauffant intégré disposé sur une membrane, laquelle est électriquement et thermiquement isolante. Deux résistances en films minces servent, pour l'une, d'élément chauffant miniature de faible inertie thermique et, pour l'autre, de capteur de mesure de la température au niveau de la membrane autour de laquelle circulent les gaz dont on cherche à déterminer la concentration. Un courant continu (environ 5mA) assure la fonction de chauffage. Par ailleurs, deux résistances de référence similaires, structurée dans le même film métallique mince, sont également intégrées à proximité de la membrane pour permettre de compenser les variations de la température ambiante. Le capteur est arrangé sur le substrat en silicium de telle sorte qu'un flux de gaz puisse avoir lieu autour de la membrane. La température de la résistance de mesure dépend du gaz qui l'entoure, de sorte qu'un changement dans la composition du gaz entraîne des variations dans le comportement en température de cette même résistance. Toutefois, pour pouvoir tenir compte des variations possibles d'humidité des gaz à mesurer, il était jusque là nécessaire d'adjoindre un capteur d'humidité, tel que celui commercialisé sous le code HS1101 par la société française Humirel, au capteur de gaz précédemment décrit. On conçoit aisément que la nécessité d'incorporer un tel capteur d'humidité ait un effet pénalisant sur le coût, l'encombrement et la complexité du système global.

D'autres solutions pour la mesure de la concentration des gaz ont déjà été proposées comme, par exemple, la solution décrite dans le brevet US 6,838,287 ou encore l'utilisation d'un filtre à gaz faisant appel au gel de silice (ou Silicagel) ou au charbon actif. La solution du brevet US ne résout pas le problème de l'humidité et le filtre à gaz ne se prête pas à la miniaturisation.

La demande de brevet US-5515714 décrit un capteur de gaz comportant une cellule de mesure à conductivité thermique avec une couche sur laquelle sont disposées une résistance de chauffage et une résistance de mesure, la résistance de chauffage étant alimentée par un courant comportant une composante alternative. Le circuit de détermination de la concentration de gaz comprend deux chaînes de traitement du signal à fréquences différentes. Toutefois, la chaîne à plus haute fréquence traite un signal provenant d'un autre capteur orienté perpendiculairement au premier, afin de faire la différence entre le signal dû au flux de gaz et celui dû à la concentration. Il s'agit donc d'un but différent de celui de la présente invention.

Divulgation de l'invention

C'est un objet de la présente invention de fournir un capteur amélioré, pour la détection par conductivité et diffusivité thermique d'un mélange de gaz, capable de pallier les inconvénients mentionnés ci-dessus. Plus particulièrement, un objet de l'invention est de fournir une méthode améliorée d'utilisation et d'implémentation d'un capteur de conductivité thermique intégré qui résulte en une mesure de concentration de gaz moins sensible à la présence de molécules de $H_2O$.

Pour déterminer et, par la suite, compenser la présence d'humidité dans le mélange de gaz, il a été proposé de faire des mesures dans plusieurs gammes de fréquence tirant parti du fait que la réponse en fréquence du capteur dans le système varie d'une manière connue en fonction de la concentration, de la nature du (ou des) gaz et de l'humidité présente. Ainsi, pour une mesure d'un mélange binaire de gaz et de l'humidité par exemple, on fera travailler le capteur à une fréquence basse et à une plus haute fréquence et l'on examinera la réponse en fréquence du capteur pour les différents gaz. Une telle solution, qui combine une commande en courant AC et DC de la résistance de chauffage, une analyse de la réponse en fréquence et une connaissance du temps de réaction du capteur aux gaz, a pour but de mesurer plusieurs paramètres des gaz, tels que leur conductivité thermique et leur diffusivité thermique, ce qui permet, en ajoutant de nouvelles équations au système de mesure, de s'affranchir de l'influence de l'humidité sans nécessiter de recourir à un capteur d'humidité.

Ainsi, plus particulièrement, l'invention concerne un capteur, pour la détermination de la concentration d'au moins un gaz (G) dans un mélange gazeux humide, comportant une cellule de mesure à conductivité thermique à laquelle le mélange de gaz est soumis, ladite cellule comprenant :

- une membrane de faible inertie thermique sur laquelle sont disposées une résistance de chauffage et une résistance de mesure et délivrant un signal fourni par ladite résistance de mesure (Vm),
- une alimentation agencée pour fournir un courant comportant une composante alternative, destinée à alimenter ladite résistance de chauffage, et
- un circuit de détermination de ladite concentration.

Selon l'invention, le circuit de détermination comprend une première chaîne de traitement à basse fréquence du signal fourni (Vm) et au moins une deuxième chaîne de traitement (30, 50) du signal (Vm), à plus haute fréquence que celle de la première chaîne et les signaux de sortie (X1, X2) des première et deuxième chaînes sont combinés pour extraire la concentration du gaz (G) et celle de l'humidité.

La première chaîne de traitement peut comprendre un premier filtre passe-bande et un premier circuit de calcul pour démoduler le signal de sortie du filtre passe-bande.

La deuxième chaîne de traitement peut également comprendre un deuxième filtre passe-bande et un deuxième circuit de calcul pour démoduler le signal de sortie du deuxième filtre passe-bande.

De manière avantageuse, les premier et deuxième circuits de calcul calculent la somme des carrés des échantillons des signaux de sortie des premier et deuxième filtres passe-bande.

La combinaison des signaux de sortie des première et deuxième chaînes est une combinaison linéaire, qui peut s'exprimer comme suit:

$$\text{Conc. (G)} = a_{11} . X1 + a_{12} . X2,$$

et

$$\text{Conc. (H}_2\text{O)} = a_{21} . X1 + a_{22} . X2,$$

où Conc. (G) et Conc. (H$_2$O) désignent les concentrations du gaz à mesurer G et de la vapeur d'eau, respectivement.

Le mélange de gaz pouvant être envoyé dans la cellule de mesure est d'abord filtré pour que sa teneur en eau ne varie que lentement dans le temps.

Le capteur peut, en outre, comporter un circuit de moyennage pour la détermination de la concentration en vapeur d'eau.

L'invention concerne également un procédé de détermination de la concentration d'au moins un gaz (G) dans un mélange gazeux humide, mettant en oeuvre une cellule de mesure telle que décrite ci-dessus à laquelle le mélange de gaz est soumis. Le procédé selon l'invention comporte les étapes suivantes:

- obtention d'un premier signal (X1) de sortie fourni par une première chaîne de traitement à basse fréquence dudit signal fourni (Vm),
- obtention d'un deuxième signal de sortie (X2) fourni par une deuxième chaîne de traitement dudit signal (Vm), à plus haute fréquence que celle de la première chaîne,
- combinaison des premier et deuxième signaux de sortie (X1, X2) pour extraire la concentration dudit au moins un gaz (G) et celle de l'humidité.

Brève description des dessins

D'autres objets, caractéristiques et avantages de la présente invention apparaîtront à la lecture de la description suivante d'exemples de réalisation particuliers ; ladite description étant faite en relation avec les dessins joints dans lesquels:

- la figure 1 est une vue en coupe d'une cellule de mesure d'un capteur de gaz pouvant être utilisée dans le cadre de la présente invention ;
- la figure 2 montre un schéma électrique de principe de la cellule de la figure 1;

- la figure 3 montre une première variante d'un capteur selon la présente invention;
- la figure 4 montre des exemples de signaux d'excitation pouvant être appliqués au capteur de l'invention; et
- la figure 5 montre une variante améliorée du capteur de la figure 3.

Mode(s) de réalisation de l'invention

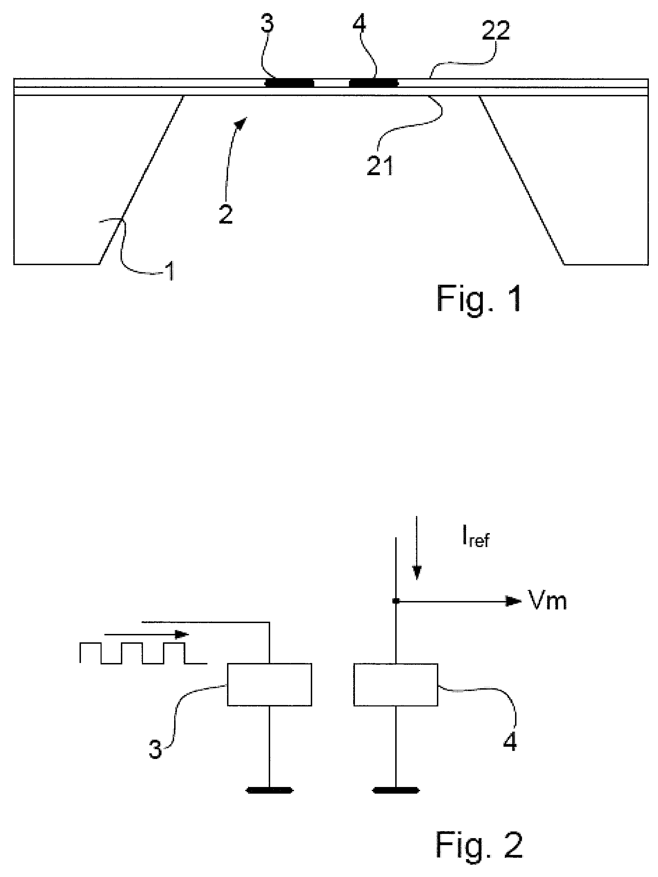

La figure 1 montre une cellule de mesure qui comporte une membrane 2 réalisée, par exemple, sur un substrat 1 de silicium en utilisant des techniques classiques de photolithographie. La membrane 2 comporte une couche 21 en nitrure de silicium qui constitue la partie inférieure de la membrane 2. Sur la couche 21 ont été déposées des couches minces définissant deux résistances 3 et 4. Ces dernières sont disposées à proximité l'une de l'autre et peuvent être en platine, nickel ou un alliage de ces deux matériaux. Après le dépôt des résistances 3 et 4, une couche de protection 22 en oxyde de silicium peut être déposée sur la couche 21. A titre d'exemple non limitatif, la membrane présente une surface de $1mm^2$ et les couches 21 et 22 ont, chacune, une épaisseur de 300nm. Comme indiqué ci-après, la résistance 3 sert de résistance de chauffage tandis que la résistance 4 est utilisée comme résistance de mesure de la température de la membrane. Le flux des gaz dont on veut mesurer la concentration est dirigé sur la membrane, au-dessus et en dessous de celle-ci.

Le schéma de la figure 2 permet d'expliquer le principe de fonctionnement de la cellule de la figure 1. La résistance de chauffage 3, par exemple d'une valeur de $200\Omega$, est alimentée par exemple par un signal pulsé à une fréquence de 1 Hz et ayant une amplitude de l'ordre de 0,5 volt. La résistance de mesure 4 reçoit un courant Iref de quelques $\mu$A, et développe à ses bornes une tension Vm = Iref. RM, RM étant la valeur de la résistance 4. Cette valeur est influencée, d'une part, par la température de la résistance de chauffage située à proximité et, d'autre part, par la composition chimique du mélange gazeux circulant autour de la résistance de mesure. Ainsi, la tension Vm constitue la variable d'entrée du circuit associé à la cellule de mesure pour la détermination de la concentration des gaz selon la présente invention.

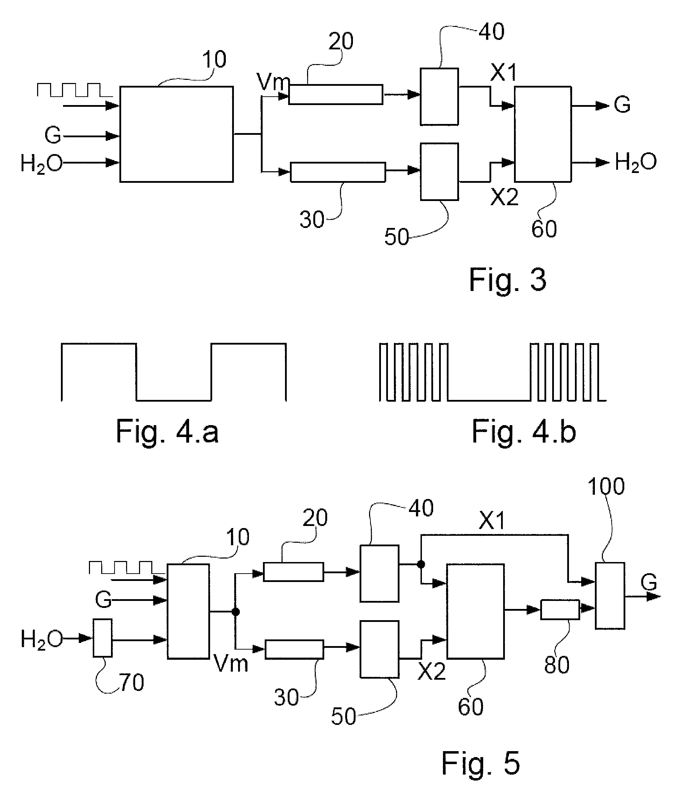

Une première variante de capteur selon l'invention est représentée à la figure 3. Ce capteur comprend une cellule de mesure 10, par exemple du type décrit en relation avec la figure 1, un circuit 20 de filtrage de type passe-bande recevant le signal Vm fourni par la cellule de mesure, un premier circuit 40 de calcul de la puissance du signal fourni par le circuit 20 et délivrant un signal X1, un circuit 30 de filtrage de type passe-bande recevant également le signal Vm, un deuxième circuit 50 de calcul de la puissance du signal fourni par le circuit 30 et délivrant un signal X2 et un circuit de calcul 60 qui, à partir des signaux X1 et X2, fournit les valeurs de concentration des gaz se trouvant dans la cellule de mesure.

Dans l'exemple considéré, le mélange gazeux comprend, en plus de l'air, un gaz G et de l'humidité ($H_2O$). Un signal pulsé à une fréquence de 1 Hz est appliqué à la cellule 10 en vue d'alimenter la résistance de chauffage de cette dernière. Le signal de tension Vm engendré par la cellule est représentatif, comme mentionné précédemment, des propriétés thermiques et massiques de la composition du mélange gazeux, tels la diffusivité thermique, la conductivité thermique, la chaleur spécifique et la densité des gaz. Ce signal est ensuite filtré, d'une part, par le premier filtre passe-bande 20 et, d'autre part, par le second filtre passe-bande 30. Le premier filtre passe-bande 20 est un filtre, par exemple du premier ordre, dont la bande passante est comprise entre 0 et une fréquence maximale qui dépend de la bande passante de la cellule de mesure, par exemple 15Hz. Le signal de sortie du filtre 20 est appliqué au circuit de calcul 40 qui calcule la puissance de ce signal. Pour ce faire, le signal de sortie du filtre 20 est, par exemple, échantillonné et le circuit 40 effectue la somme des carrés de ces échantillons sur une période donnée, par exemple, une seconde. Le filtre 30 a typiquement une bande passante comprise entre 15Hz (fréquence maximale du filtre passe-bande 20) et 60Hz. Le circuit 50 effectue la même opération sur le signal de sortie du filtre 30 que le circuit 40 sur le signal de sortie du filtre 20. Les circuits 40 et 50 opèrent un calcul de puissance, ce qui équivaut à un calcul d'enveloppe ou, plus généralement, à une démodulation du signal d'entrée. Le filtre 20 et le circuit 40 constituent une première chaîne de traitement, dite à basse fréquence, alors que le filtre 30 et le circuit 50 constituent une deuxième chaîne de traitement à plus haute fréquence. Les signaux X1 et X2 de sortie des circuits 40 et 50 sont ensuite appliqués au circuit de calcul 60, lequel résout les équations suivantes:

$$\text{Conc. (G)} = a_{11} \cdot X1 + a_{12} \cdot X2$$

$$\text{Conc. (}H_2O\text{)} = a_{21} \cdot X1 + a_{22} \cdot X2,$$

où Conc. (G) et Conc. ($H_2O$) désignent respectivement les concentrations du gaz à mesurer G et de la vapeur d'eau dans le mélange de gaz.

Les coefficients $a_{11}$, $a_{12}$, $a_{21}$ et $a_{22}$ sont déterminés lors de la calibration du capteur avec des mélanges de gaz de composition et concentration connues. Les équations données ci-dessus correspondent, pour les concentrations des gaz, à des fonctions linéaires des variables d'entrée X1 et X2; il va de soi que l'on ne saurait se limiter à de telles fonctions et que d'autres fonctions plus complexes de ces mêmes variables pourraient également être utilisées.

La figure 4 montre des exemples de signaux d'excitation pouvant être appliqués à la résistance de chauffage de la cellule de mesure. A la figure 4.a, on a représenté un simple signal pulsé dont la fréquence est de 1 Hz. A la figure 4.b est représenté le même signal sur lequel a été superposé un signal à une fréquence haute de 15Hz. La superposition d'un signal haute fréquence (de 15 à 20Hz) sur le signal de base illustré sur la figure 4.a, a pour but de favoriser le signal à haute fréquence et d'améliorer le rapport signal sur bruit de ce dernier.

La figure 5 montre une variante améliorée du capteur de la figure 3, les éléments équivalents dans les deux figures portant les mêmes références. En effet, avec la variante de la figure 3, la précision des mesures de concentration peut, dans certaines applications, s'avérer insuffisante, notamment lorsque le taux d'humidité varie au cours de la mesure. Il s'ensuit que la mesure de la concentration recherchée du gaz présente un pourcentage de bruit trop élevé. Afin de s'affranchir de ce problème, il est proposé, d'une part, d'utiliser un filtre d'humidité, par exemple, à base de Silicagel ou de charbon actif à l'entrée de la cellule de mesure 10 et, d'autre part, de filtrer le bruit sur le signal de sortie en effectuant, par exemple, un moyennage de ce dernier.

Le filtre d'humidité 70 a pour fonction d'empêcher que le taux d'humidité dans la cellule de mesure ne varie trop rapidement, il fonctionne donc comme un filtre passe-bas connu. A titre d'exemple, il sera choisi de telle sorte que la variation relative du taux d'humidité dans la cellule reste inférieure à 5% sur une période d'une demi-heure.

Le signal de sortie du circuit de calcul 60, qui représente la valeur estimée de la concentration d'eau, est appliqué à un filtre passe-bas 100. Ce filtre doit, pour une meilleure efficacité, présenter des caractéristiques fréquentielles semblables à celles du filtre 70. La sortie du filtre 100 est appliquée à un deuxième circuit de calcul 100 qui reçoit sur une deuxième entrée le signal X1 de sortie du circuit 40. Le circuit 100 délivre la valeur de la concentration du gaz G en résolvant l'équation suivante:

$$\text{Conc. (G)} = (a_{11} - (a_{12} \cdot a_{21}) / a_{22}) \cdot X1 + (a_{12} / a_{22}) \cdot f (H_2O),$$

où la fonction f ( ) représente la fonction de transfert du filtre 80 et $H_2O$ est la valeur de la concentration estimée de l'humidité fournie par le circuit 60.

Dans la description ci-dessus, on a considéré le mélange d'un gaz G dans de l'air avec de l'humidité. Il est bien sûr possible d'appliquer les principes de l'invention pour la mesure de la concentration de plusieurs gaz mélangés à de l'air et à de la vapeur d'eau. Dans ce cas, on augmentera d'autant le nombre de gammes de fréquence dans le circuit de mesure afin d'avoir autant d'équations qu'il y a d'inconnues à déterminer.

Il va de soi que toutes les opérations décrites ci-dessus à l'aide d'une terminologie conventionnelle peuvent être effectuées, dans le domaine numérique, à l'aide d'un processeur avantageusement placé sur la cellule de mesure.

Une application particulièrement intéressante de l'invention est la mesure du dioxyde de carbone ($CO_2$) dans l'air humide, une telle mesure pouvant être faite pour donner une alarme en cas de valeur de concentration trop élevée. D'autres applications visent la mesure de l'hydrogène, le méthane, notamment en relation avec des piles à combustible ("fuel cells"), le biogaz, l'avantage principal étant, comme indiqué précédemment, de pouvoir déterminer avec précision la concentration d'un gaz au moins dans une atmosphère humide sans pour autant nécessiter de capteur d'humidité.

Cette méthode peut-être étendue une combinaison polynomiale et non linéaire de caractéristiques pouvant être extraites du signal mesuré tels que le temps de montée, l'amplitude, la valeur moyenne... Elle peut également être appliquée à tout mélange de gaz tertiaire ou quasi-tertiaire ou le troisième gaz a mesuré remplacerait l'humidité.

## Revendications

**1.** Capteur, pour la détermination de la concentration d'au moins un gaz (G) dans un mélange gazeux humide, comportant une cellule de mesure à conductivité thermique (10) à laquelle le mélange de gaz est soumis, ladite cellule comprenant

- une membrane (2) de faible inertie thermique sur laquelle sont disposées une résistance de chauffage (3) et une résistance de mesure (4) et délivrant un signal fourni par ladite résistance de mesure (Vm),
- une alimentation agencée pour fournir un courant comportant une composante alternative, destinée à alimenter ladite résistance de chauffage, et
- un circuit de détermination de ladite concentration,

**caractérisé en ce que** ledit circuit de détermination comprend une première chaîne de traitement (20, 40) à une première fréquence dudit signal fourni (Vm) et au moins une deuxième chaîne de traitement (30, 50) dudit signal (Vm), à une deuxième fréquence plus haute que celle de la première chaîne,
et **en ce que** les signaux de sortie (X1, X2) desdites première et deuxième chaînes sont combinés pour extraire la concentration dudit au moins un gaz (G) et celle de l'humidité.

2. Capteur selon la revendication 1, **caractérisé en ce que** ladite première chaîne de traitement comprend un premier filtre passe-bande (20) et un premier circuit de calcul (40) pour démoduler le signal de sortie dudit filtre passe-bande.

3. Capteur selon la revendication 1, **caractérisé en ce que** ladite deuxième chaîne de traitement comprend un second filtre passe-bande (30) et un deuxième circuit de calcul (50) pour démoduler le signal de sortie dudit filtre passe-bande.

4. Capteur selon les revendications 2 et 3, **caractérisé en ce que** les premier (40) et deuxième (50) circuits de calcul calculent la somme des carrés des échantillons des signaux de sortie des filtres passe-bande (20) et passe-bande (30), respectivement.

5. Capteur selon la revendication 1, **caractérisé en ce que** la combinaison desdits signaux de sortie desdites première et deuxième chaînes est une combinaison linéaire.

6. Capteur selon la revendication 5, **caractérisé en ce que** ladite combinaison linéaire s'exprime comme suit:

$$\text{Conc. } (G) = a_{11} \cdot X1 + a_{12} \cdot X2,$$

et

$$\text{Conc. } (H_2O) = a_{21} \cdot X1 + a_{22} \cdot X2,$$

où Conc. (G) et Conc. ($H_2O$) désignent les concentrations du gaz à mesurer G et de la vapeur d'eau, respectivement.

7. Capteur selon la revendication 1, **caractérisé en ce que** la combinaison desdits signaux de sortie desdites première et deuxième chaînes est une combinaison polynomiale.

8. Capteur selon la revendication 1, **caractérisé en ce que** le mélange de gaz envoyé dans ladite cellule de mesure est d'abord filtré pour que sa teneur en eau ne varie que lentement dans le temps.

9. Capteur selon l'une des revendications 5 à 8, **caractérisé en ce qu'**il comporte en outre un circuit de moyennage pour la détermination de la concentration en vapeur d'eau.

10. Procédé de détermination de la concentration d'au moins un gaz (G) dans un mélange gazeux humide, mettant en oeuvre une cellule de mesure à conductivité thermique (10) à laquelle le mélange de gaz est soumis, ladite cellule comprenant:

   - une membrane (2) sur laquelle sont disposées une résistance de chauffage (3) et une résistance de mesure (4) et délivrant un signal fourni par ladite résistance de mesure (Vm), ladite résistance de chauffage étant alimentée par un courant comportant une composante alternative, et
   - un circuit de détermination de ladite au moins une concentration, **caractérisé en ce que** le procédé comporte les étapes suivantes:
   - obtention d'un premier signal (X1) de sortie fourni par une première chaîne de traitement (20, 40) à une première fréquence dudit signal fourni (Vm),
   - obtention d'un deuxième signal de sortie (X2) fourni par une deuxième chaîne de traitement (30, 50) dudit signal (Vm), à une deuxième fréquence plus haute que celle de la première chaîne,
   - combinaison des premier et deuxième signaux de sortie (X1, X2) pour extraire la concentration dudit au moins un gaz (G) et celle de l'humidité.

11. Procédé selon la revendication 9, **caractérisé en ce que** la combinaison desdits signaux de sortie desdites première et deuxième chaînes est une combinaison linéaire.

12. Procédé selon la revendication 10, **caractérisé en ce que** ladite combinaison linéaire s'exprime comme suit:

$$\text{Conc. (G)} = a_{11} \cdot X1 + a_{12} \cdot X2,$$

et

$$\text{Conc. (H}_2\text{O)} = a_{21} \cdot X1 + a_{22} \cdot X2,$$

où Conc. (G) et Conc. ($H_2O$) désignent les concentrations du gaz à mesurer G et de la vapeur d'eau, respectivement.

13. Procédé selon la revendication 9, **caractérisé en ce que** la combinaison desdits signaux de sortie desdites première et deuxième chaînes est une combinaison polynomiale.

## Patentansprüche

1. Sensor zur Bestimmung der Konzentration mindestens eines Gases (G) in einem feuchten gasführenden Gemisch, aufweisend eine Messzelle mit thermischer Konduktivität (10), welcher das Gasgemisch ausgesetzt wird, wobei die Zelle umfasst:

   - eine Membran (2) mit schwacher thermischer Trägheit, auf welcher ein Heizwiderstand (3) und ein Messwiderstand (4) angeordnet sind und ein Signal bereitstellen, das von dem Messwiderstand (Vm) geliefert wird,
   - eine Versorgung, die ausgebildet ist, um einen Strom zu liefern, der eine Wechselspannungskomponente aufweist, die bestimmt ist, den Heizwiderstand zu versorgen, und
   - einen Bestimmungskreis der Konzentration,
   **dadurch gekennzeichnet, dass** der Bestimmungskreis eine erste Verarbeitungskette (20, 40) mit einer ersten Frequenz des gelieferten Signals (Vm) und mindestens eine zweite Verarbeitungskette (30, 50) des Signals (Vm) mit einer zweiten höheren Frequenz als die der ersten Kette umfasst, und dass die Ausgangssignale (X1, X2) der ersten und zweiten Kette kombiniert sind, um die Konzentration des mindestens einen Gases (G) und die der Feuchtigkeit zu extrahieren.

2. Sensor nach Anspruch 1, **dadurch gekennzeichnet, dass** die erste Verarbeitungskette einen ersten Bandpassfilter (20) und einen ersten Berechnungskreis (40) umfasst, um das Ausgangssignal des Bandpassfilters zu demodulieren.

3. Sensor nach Anspruch 1, **dadurch gekennzeichnet, dass** die zweite Verarbeitungskette einen zweiten Bandpassfilter (30) und einen zweiten Berechnungskreis (50) umfasst, um das Ausgangssignal des Bandpassfilters zu demodulieren.

4. Sensor nach den Ansprüchen 2 und 3, **dadurch gekennzeichnet, dass** der erste (40) und zweite (50) Berechnungskreis die Summe der Quadrate der Proben der Ausgangssignale der jeweiligen Bandpassfilter (20) und Bandfilter (30) berechnen.

5. Sensor nach Anspruch 1, **dadurch gekennzeichnet, dass** die Kombination der Ausgangssignale der ersten und zweiten Kette eine lineare Kombination ist.

6. Sensor nach Anspruch 5, **dadurch gekennzeichnet, dass** sich die lineare Kombination wie folgt ausdrückt:

$$\text{Konz. (G)} = a_{11} \cdot X1 + a_{12} \cdot X2,$$

und

$$\text{Konz. (H}_2\text{O)} = a_{21} \cdot X1 + a_{22} \cdot X2,$$

wobei Konz. (G) und Konz. (H$_2$O) die jeweiligen Konzentrationen des zu messenden Gases G und des Wasserdampfs bezeichnen.

7. Sensor nach Anspruch 1, **dadurch gekennzeichnet, dass** die Kombination der Ausgangssignale der ersten und zweiten Kette eine polynomiale Kombination ist.

8. Sensor nach Anspruch 1, **dadurch gekennzeichnet, dass** das in die Messzelle geschickte Gasgemisch zunächst gefiltert wird, damit sein Wassergehalt im Zeitverlauf nur langsam variiert.

9. Sensor nach einem der Ansprüche 5 bis 8, **dadurch gekennzeichnet, dass** er ferner einen Mittelwertbildungskreis zur Bestimmung der Wasserdampfkonzentration aufweist.

10. Verfahren zur Bestimmung der Konzentration mindestens eines Gases (G) in einem feuchten Gasgemisch, das eine Messzelle mit thermischer Konduktivität (10) umsetzt, welcher das Gasgemisch ausgesetzt wird, wobei die Zelle umfasst:

   - eine Membran (2), auf welcher ein Heizwiderstand (3) und ein Messwiderstand (4) angeordnet sind und ein von dem Messwiderstand (Vm) bereitgestelltes Signal liefern, wobei der Heizwiderstand von einem Strom versorgt wird, der eine Wechselspannungskomponente aufweist, und
   - einen Bestimmungskreis der mindestens einen Konzentration, **dadurch gekennzeichnet, dass** das Verfahren die folgenden Schritte aufweist:
   - Erhalten eines ersten Ausgangssignals (X1), das von einer ersten Verarbeitungskette (20, 40) mit einer ersten Frequenz des gelieferten Signals (Vm) geliefert wird,
   - Erhalten eines zweiten Ausgangssignals (X2), das von einer zweiten Verarbeitungskette (30, 50) des Signals (Vm) mit einer zweiten höheren Frequenz als die der ersten Kette geliefert wird,
   - Kombination des ersten und zweiten Ausgangssignals (X1, X2), um die Konzentration des mindestens einen Gases (G) und die der Feuchtigkeit zu extrahieren.

11. Verfahren nach Anspruch 9, **dadurch gekennzeichnet, dass** die Kombination der Ausgangssignale der ersten und zweiten Kette eine lineare Kombination ist.

12. Verfahren nach Anspruch 10, **dadurch gekennzeichnet, dass** sich die lineare Kombination wie folgt ausdrückt:

$$\text{Konz. (G)} = a_{11} \cdot X1 + a_{12} \cdot X2,$$

und

$$\text{Konz. (H}_2\text{O)} = a_{21} \cdot X1 + a_{22} \cdot X2,$$

wobei Konz. (G) und Konz. (H$_2$O) die jeweiligen Konzentrationen des zu messenden Gases G und des Wasserdampfs bezeichnen.

13. Verfahren nach Anspruch 9, **dadurch gekennzeichnet, dass** die Kombination der Ausgangssignale der ersten und zweiten Kette eine polynomiale Kombination ist.

**Claims**

1. A sensor, for determining the concentration of at least one gas (G) in a moist gas mixture, comprising a thermal conductivity measuring cell (10) to which the gas mixture is subjected, said cell comprising

   - a membrane (2) with low thermal inertia on which a heating resistance (3) and a measuring resistance (4) are arranged and delivering a signal provided by said measuring resistance (Vm),
- a power source arranged to provide a current including an alternating component, intended to power said heating resistance, and
- a circuit for determining said concentration,
**characterized in that** said determining circuit comprises a first processing chain (20, 40) at a first frequency of said supplied signal (Vm) and at least one second processing chain (30, 50) for said signal (Vm), at a second frequency higher than that of the first chain,
and **in that** the output signals (X1, X2) of said first and second chains are combined to extract the concentration of said at least one gas (G) and that of the moisture.

2. The sensor according to claim 1, **characterized in that** said first processing chain comprises a first bandpass filter (20) and a first computing circuit (40) to demodulate the output signal from said bandpass filter.

3. The sensor according to claim 1, **characterized in that** said second processing chain comprises a second bandpass filter (30) and a second computing circuit (50) to demodulate the output signal of said bandpass filter.

4. The sensor according to claims 2 and 3, **characterized in that** the first (40) and second (50) computing circuits compute the sum of the squares of the samples of the output signals of the bandpass (20) and bandpass (30) filters, respectively.

5. The sensor according to claim 1, **characterized in that** the combination of said output signals of the first and second chains is a linear combination.

6. The sensor according to claim 5, **characterized in that** said linear combination is expressed as follows:

$$\text{Conc. (G)} = a_{11} \cdot X1 + a_{12} \cdot X2,$$

and

$$\text{Conc. (H}_2\text{O)} = a_{21} \times X1 + a_{22} \cdot X2,$$

where Conc. (G) and Conc. (H$_2$O) designate the concentrations of the gas to be measured G and steam, respectively.

7. The sensor according to claim 1, **characterized in that** the combination of said output signals of said first and second chains is a polynomial combination.

8. The sensor according to claim 1, **characterized in that** the gas mixture sent in to said measuring cell is first filtered so that its water content only varies slowly over time.

9. The sensor according to one of claims 5 to 8, **characterized in that** it further includes an averaging circuit for determining the steam concentration.

10. A method for determining the concentration of at least one gas (G) in a moist gas mixture, implementing a thermal conductivity measuring cell (10) to which the gas mixture is subjected, said cell comprising:

- a membrane (2) on which a heating resistance (3) and a measuring resistance (4) are positioned and delivering a signal supplied by said measuring resistance (Vm), said heating resistance being powered by a current including an alternating component, and
- a circuit for determining said at least one concentration, **characterized in that** the method includes the following steps:
- obtaining a first output signal (X1) supplied by a first processing chain (20, 40) at a first frequency of said supplied signal (Vm),
- obtaining a second output signal (X2) supplied by a second processing chain (30, 50) of said signal (Vm), at a second frequency higher than that of the first chain,
- combining the first and second output signals (X1, X2) to extract the concentration of said at least one gas (G) and that of the moisture.

11. The method according to claim 9, **characterized in that** the combination of said output signals of said first and second chains is a linear combination.

12. The method according to claim 10, **characterized in that** said linear combination is expressed as follows:

$$\text{Conc. (G)} = a_{11} \cdot X1 + a_{12} \cdot X2,$$

and

$$\text{Conc. (H}_2\text{O)} = a_{21} \times X1 + a_{22} \cdot X2,$$

where Conc. (G) and Conc. (H$_2$O) designate the concentrations of the gas to be measured G and steam, respectively.

13. The method according to claim 9, **characterized in that** the combination of said output signals of said first and second chains is a polynomial combination.

Fig. 1

$I_{ref}$

$Vm$

Fig. 2

Fig. 3

Fig. 4.a

Fig. 4.b

Fig. 5

**EP 2 115 440 B1**

## RÉFÉRENCES CITÉES DANS LA DESCRIPTION

**Documents brevets cités dans la description**

- US 6838287 B

- US 5515714 A